(19)

Europäisches
Patentamt
European
Patent Office
Office européen
des brevets

(11) **EP 2 727 466 A1**

(12) **EUROPEAN PATENT APPLICATION**
published in accordance with Art. 153(4) EPC

(43) Date of publication:
**07.05.2014 Bulletin 2014/19**

(21) Application number: **12804251.2**

(22) Date of filing: **28.06.2012**

(51) Int Cl.:
**A01N 41/10** *(2006.01)*    **A01M 1/20** *(2006.01)*
**A01N 43/56** *(2006.01)*    **A01P 7/04** *(2006.01)*

(86) International application number:
**PCT/JP2012/066473**

(87) International publication number:
**WO 2013/002299 (03.01.2013 Gazette 2013/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2011   JP 2011144372**

(71) Applicant: **Nihon Nohyaku Co., Ltd.
Tokyo 104-8386 (JP)**

(72) Inventors:
• **TAMURA, Shingo
Kawachinagano-shi
Osaka 586-0094 (JP)**

• **AOKI, Takao
Kawachinagano-shi
Osaka 586-0094 (JP)**
• **KURIYAMA, Ken
Tokyo 103-8236 (JP)**

(74) Representative: **Witte, Weller & Partner
Patentanwälte mbB
Königstrasse 5
70173 Stuttgart (DE)**

(54) **AGRICULTURAL AND HORTICULTURAL INSECTICIDE COMPOSITION AND UTILIZATION METHOD THEREFOR**

(57)    Provided are an agricultural and horticultural insecticide composition comprising Flubendiamide and Tolfenpyrad as active ingredients; and a method for using an agricultural and horticultural insecticide composition, comprising treating insect pests directly, treating crops potentially infested with the insect pests, or treating surrounding soil or cultivation medium of the crops with an effective amount of an agricultural and horticultural insecticide composition comprising flubendiamide and tolfenpyrad as active ingredients.

EP 2 727 466 A1

**Description**

TECHNICAL FIELD

The present invention relates to an agricultural and horticultural insecticide composition comprising flubendiamide and tolfenpyrad as active ingredients; and a method for using the same.

BACKGROUND ART

Flubendiamide is a commercially available compound as an agricultural and horticultural insecticide. It is known that various combinations of flubendiamide or its relative compound and an agricultural and horticultural insecticide have a complementary effect on the insecticidal spectrum and that specific combinations of them produce a synergistic effect (for example, see Patent Literature 1 to 5 and Non Patent Literature 1). Tolfenpyrad is also a commercially available compound as an agricultural and horticultural insecticide. It is also known that various combinations of tolfenpyrad and an agricultural and horticultural insecticide have a complementary effect on the insecticidal spectrum and that specific combinations of them produce a synergistic effect (for example, see Patent Literature 6 and 7 and Non Patent Literature 1). However, compositions comprising a combination of flubendiamide and tolfenpyrad are not known, and it is not known at all that the insecticidal effect of such a composition is synergistically greater than that of each compound used separately.

CITATION LIST

Patent Literature

    Patent Literature 1: JP-A 2001-131141
    Patent Literature 2: WO 2002/087334
    Patent Literature 3: WO 2004/034786
    Patent Literature 4: WO 2005/004603
    Patent Literature 5: WO 2005/004604
    Patent Literature 6: JP-A 03-81266
    Patent Literature 7: JP-A 2006-131516

Non Patent Literature

Non Patent Literature 1:

    The Pesticide Manual 14th Edition (British Crop Production Council)

SUMMARY OF INVENTION

TECHNICAL PROBLEM

In the production of agricultural produce, the damage caused by various insect pests is still large and treatment with various insecticides is required for control of the insect pests. Such insecticide treatment imposes a particularly great burden on farmers, and reducing the treatment operation has been strongly desired in terms of occupational health, in particular the reduction of farmers' workload, as well as in terms of economics, in particular the reduction of production costs of agricultural produce. To this end, various kinds of agricultural and horticultural insecticide compositions have been developed. However, in conventional art, effective pest control cannot be achieved in some cases because of the kind of insect pest to be controlled, habitat characteristics, development of insecticide resistance, etc. Under such circumstances, the development of novel technologies for efficiently controlling insect pests that have been difficult or impossible to control is desired.

SOLUTION TO PROBLEM

The present inventors conducted extensive research to solve the above-described problems. As a result, the present inventors found that a combined use of flubendiamide (general name) (chemical name: 3-iodo-N'-(2-mesyl-1,1-dimethylethyl)-N-{4-[1,2,2,2-tetrafl uoro-1-(trifluoromethyl)ethyl]-o-tolyl}phthalamide), known as an agricultural and horticultural insecticide, and tolfenpyrad (general name) (chemical name: 4-chloro-3-ethyl-1-methyl-N-[4-(p-tolyloxy)benzyl]pyrazole-5-carboxamide), similarly known as an agricultural and horticultural insecticide, has advantages over a separate use of each compound, such as remarkable synergistic effect, expansion of the range of target insect pests, dose reduction, reduction of treatment frequency, etc. Thus, the present invention was completed.

That is, the present invention relates to the following.

[1] An agricultural and horticultural insecticide composition comprising flubendiamide and tolfenpyrad as active ingredients.

[2] The agricultural and horticultural insecticide composition according to the above [1], comprising 0.1 to 10 parts by mass of tolfenpyrad per part by mass of flubendiamide.

[3] A method for using an agricultural and horticultural insecticide composition, comprising treating insect pests directly, treating crops potentially infested with the insect pests, or treating surrounding soil or cultivation medium of the crops with an effective amount of an agricultural and horticultural insecticide composition comprising flubendiamide and tolfenpyrad as active ingredients.

[4] A method for controlling agricultural and horticultural insect pests, comprising treating insect pests directly, treating crops potentially infested with the insect pests, or treating surrounding soil or cultivation medium of the crops with an effective amount of an optionally diluted formulation containing flubendiamide as an active ingredient and an effective amount of an optionally diluted formulation containing tolfenpyrad as an active ingredient, the two formulations being used separately but in the same period.

[5] A method for controlling agricultural and horticultural insect pests, comprising treating insect pests directly, treating crops potentially infested with the insect pests, or treating surrounding soil or cultivation medium of the crops with an effective amount of an optionally diluted formulation containing flubendiamide as an active ingredient and an effective amount of an optionally diluted formulation containing tolfenpyrad as an active ingredient, the two formulations being used separately at a given interval.

[6] A method for controlling agricultural and horticultural insect pests, comprising mixing an effective amount of a formulation containing flubendiamide as an active ingredient and an effective amount of a formulation containing tolfenpyrad as an active ingredient; optionally diluting the mixture; and treating insect pests directly, treating crops potentially infested with the insect pests, or treating surrounding soil or cultivation medium of the crops with the optionally diluted mixture.

ADVANTAGEOUS EFFECTS OF INVENTION

The present invention relates to an agricultural and horticultural insecticide composition comprising flubendiamide and tolfenpyrad as active ingredients; and a method for using the same. The agricultural and horticultural insecticide composition and the method have advantages over a separate use of each compound, such as remarkable synergistic effect, expansion of the range of target insect pests, dose reduction, reduction of treatment frequency, etc. Therefore, the present invention provides a novel technology for efficiently controlling insect pests that have been impossible or difficult to control by conventional technologies.

DESCRIPTION OF EMBODIMENTS

Flubendiamide, which is one of the active ingredients of the agricultural and horticultural insecticide composition of the present invention, can be produced according to the production method disclosed in Patent Literature 1 etc., but commercial formulations thereof are also available for purchase. Tolfenpyrad, which is the other active ingredient, can be produced according to the production method disclosed in Patent Literature 6, but commercial formulations thereof are also available for purchase. These compounds, an appropriate inactive carrier and a surfactant, and if needed an adjuvant are blended in an appropriate ratio, and through the step of dissolution, separation, suspension, mixing, impregnation, adsorption and/or adhesion, are formulated into an appropriate form for application, such as a suspension concentrate (flowable), an emulsifiable suspension concentrate, an emulsifiable concentrate, a soluble concentrate, a wettable powder, a water-dispersible granule, a granule, a dust, a microcapsule, a capsule, a tablet, a jumbo and a pack.

The total content of the active ingredients in the agricultural and horticultural insecticide composition of the present invention can be adjusted as needed without particular limitation, but is usually about 0.01 to 90 parts by mass. For example, in the case where the agricultural and horticultural insecticide composition is a dust or a granule, the total content of the active ingredients is preferably about 0.1 to 30 parts by mass, and in the case where the agricultural and horticultural insecticide composition is an emulsifiable concentrate, a wettable powder, a flowable, a water-dispersible granule or the like, the total content of the active ingredients is preferably about 0.1 to 60 parts by mass. The blending ratio of the active ingredients flubendiamide and tolfenpyrad in the agricultural and horticultural insecticide composition of the present invention is appropriately selected from the range of 0.1 to 10 parts by mass of tolfenpyrad per part by mass of flubendiamide.

As for these active ingredients, their commercial formulations may be used as they are. Alternatively, the active ingredients can be prepared into separate formulations or a combined formulation. For the preparation of a formulation, the active ingredient(s) and an appropriate inactive carrier, and if needed an adjuvant are blended in an appropriate ratio, and through the step of dissolution, separation, suspension, mixing, impregnation, adsorption and/or adhesion, are formulated into an appropriate form for application, such as a suspension concentrate (flowable), an emulsifiable suspension concentrate, an emulsifiable concentrate, a soluble concentrate, a wettable powder, a water-dispersible granule, a granule, a dust, a microcapsule, a capsule, a tablet, a jumbo and a pack.

The inactive carrier may be a solid or liquid carrier. Examples of the solid carrier include natural minerals, such as quartz, clay, kaolinite (kaolin), pyrophyllite, sericite, talc, bentonite, acid clay, attapulgite, zeolite and diatomite; inorganic salts, such as calcium carbonate, ammonium sulfate, sodium sulfate and potassium chloride; organic solid carriers, such as synthetic silicic acid, synthetic silicates, starch, cellulose and plant powders (for example, sawdust, coconut shell, corn cob, tobacco stalk, etc.); plastics carriers, such as polyethylene, polypropylene and polyvinylidene chloride; urea; hollow inorganic materials; hollow plastic materials; and fumed silica (white carbon). These solid carriers may be used alone or in a combination of two or more kinds.

Examples of the liquid carrier include alcohols including monohydric alcohols, such as methanol, ethanol, propanol, isopropanol and butanol, and polyhydric alcohols, such as ethylene glycol, diethylene glycol, propylene glycol, hexylene glycol, polyethylene glycol, polypropylene glycol and glycerin; polyol compounds, such as propylene glycol ether; ketones, such as acetone, methyl ethyl ketone, methyl isobutyl ketone, diisobutyl ketone and cyclohexanone; ethers, such as ethyl ether, dioxane, ethylene glycol monoethyl ether, dipropyl ether and tetrahydrofuran; aliphatic hydrocarbons, such as normal paraffin, naphthene, isoparaffin, kerosene and mineral oil; aromatic hydrocarbons, such as benzene, toluene, xylene, solvent naphtha and alkyl naphthalene; halogenated hydrocarbons, such as dichloromethane, chloroform and carbon tetrachloride; esters, such as ethyl acetate, diisopropyl phthalate, dibutyl phthalate, dioctyl phthalate and dimethyl adipate; lactones, such as gamma-butyrolactone; amides, such as dimethylformamide, diethylformamide, dimethylacetamide and N-alkyl pyrrolidone (N-methyl pyrrolidone etc.); nitriles, such as acetonitrile; sulfur compounds, such as dimethyl sulfoxide; vegetable oils, such as soybean oil, rapeseed oil, cotton seed oil and castor oil; and water. These liquid carriers may be used alone or in a combination of two or more kinds.

Examples of the adjuvant include surfactants used as a dispersant, a wetting agent, a spreader, a sticking/spreading agent, etc., binders, tackifiers, thickeners, colorants, antifreezing agents, anti-caking agents, disintegrants and stabilizing agents. If needed, preservatives, plant fragments, etc. may be additionally used. These adjuvants may be used alone or in a combination of two or more kinds.

Examples of the surfactants used as a dispersant, a wetting agent, a spreader, a sticking/spreading agent, etc. include nonionic surfactants, such as sorbitan fatty acid ester, polyoxyethylene sorbitan fatty acid ester, sucrose fatty acid ester, polyoxyethylene fatty acid ester, polyoxyethylene resin acid ester, polyoxyethylene fatty acid diester, polyoxyethylene alkyl ether, polyoxyethylene alkyl aryl ether, polyoxyethylene alkyl phenyl ether, polyoxyethylene dialkyl phenyl ether, polyoxyethylene alkyl phenyl ether-formaldehyde condensates, polyoxyethylene-polyoxypropylene block copolymers, polystyrene-polyoxyethylene block polymers, alkyl polyoxyethylene-polypropylene block copolymer ether, polyoxyethylene alkylamine, polyoxyethylene fatty acid amide, polyoxyethylene fatty acid bis(phenyl ether), polyalkylene benzyl phenyl ether, polyoxyalkylene styryl phenyl ether, acetylene diol, polyoxyalkylene-added acetylene diol, polyoxyethylene ether-type silicone, ester-type silicone, fluorosurfactants, polyoxyethylene castor oil and polyoxyethylene hydrogenated castor oil; anionic surfactants, such as alkyl sulfates, polyoxyethylene alkyl ether sulfates, polyoxyethylene alkyl phenyl ether sulfates, polyoxyethylene styryl phenyl ether sulfates, alkylbenzene sulfonates, alkylaryl sulfonates, lignosulfonates, alkyl sulfosuccinates, naphthalene sulfonates, alkylnaphthalene sulfonates, salts of naphthalenesulfonic acid-formaldehyde condensates, salts of alkylnaphthalenesulfonic acid-formaldehyde condensates, fatty acid salts, polycarboxylic acid salts, polyacrylates, N-methyl-fatty acid sarcosinates, resinates, polyoxyethylene alkyl ether phosphates and polyoxyethylene alkyl phenyl ether phosphates; cationic surfactants including alkyl amine salts, such as lauryl amine hydrochloride, stearyl amine hydrochloride, oleyl amine hydrochloride, stearyl amine acetate, stearyl aminopropyl amine acetate, alkyl trimethyl ammonium chloride and alkyl dimethyl benzalkonium chloride; and amphoteric surfactants, such as amino acid-type or betaine-type amphoteric surfactants. These surfactants may be used alone or in a combination of two or more kinds.

Examples of the binders or the tackifiers include carboxymethyl cellulose and salts thereof, dextrin, soluble starch, xanthan gum, guar gum, sucrose, polyvinyl pyrrolidone, gum arabic, polyvinyl alcohol, polyvinyl acetate, sodium polyacrylate, polyethylene glycols with an average molecular weight of 6,000 to 20,000, polyethylene oxides with an average molecular weight of 100,000 to 5,000,000, phospholipids (for example, cephalin, lecithin, etc.), cellulose powder, dextrin, modified starch, polyaminocarboxylic acid chelating compounds, cross-linked polyvinyl pyrrolidone, maleic acid-styrene copolymers, (meth)acrylic acid copolymers, half esters of polyhydric alcohol polymer and dicarboxylic anhydride, water soluble polystyrene sulfonates, paraffin, terpene, polyamide resins, polyacrylates, polyoxyethylene, waxes, polyvinyl alkyl ether, alkylphenol-formaldehyde condensates and synthetic resin emulsions.

Examples of the thickeners include water soluble polymers, such as xanthan gum, guar gum, diutan gum, carboxymethyl cellulose, polyvinyl pyrrolidone, carboxyvinyl polymers, acrylic polymers, starch derivatives and polysaccharides; and inorganic fine powders, such as high grade bentonite and fumed silica (white carbon).

Examples of the colorants include inorganic pigments, such as iron oxide, titanium oxide and prussian blue; and organic dyes, such as alizarin dyes, azo dyes and metal phthalocyanine dyes.

Examples of the antifreezing agents include polyhydric alcohols, such as ethylene glycol, diethylene glycol, propylene glycol and glycerin.

Examples of the adjuvants serving to prevent caking or facilitate disintegration include polysaccharides (starch, alginic acid, mannose, galactose, etc.), polyvinyl pyrrolidone, fumed silica (white carbon), ester gum, petroleum resin, sodium tripolyphosphate, sodium hexametaphosphate, metal stearates, cellulose powder, dextrin, methacrylate copolymers, polyvinyl pyrrolidone, polyaminocarboxylic acid chelating compounds, sulfonated styrene-isobutylene-maleic anhydride copolymers and starch-polyacrylonitrile graft copolymers.

Examples of the stabilizing agents include desiccants, such as zeolite, quicklime and magnesium oxide; antioxidants, such as phenolic compounds, amine compounds, sulfur compounds and phosphoric acid compounds; and ultraviolet absorbers, such as salicylic acid compounds and benzophenone compounds. Examples of the preservatives include potassium sorbate and 1,2-benzothiazolin-3-one.

Further, other adjuvants including functional spreading agents, activity enhancers such as metabolic inhibitors (piperonyl butoxide etc.), antioxidants (BHT etc.) and ultraviolet absorbers can also be used if needed.

The "crops" for which the agricultural and horticultural insecticide composition of the present invention can be used is not particularly limited, and the examples include cereals such as rice, barley, wheat, rye, oats, corn and sorghum; legumes such as soybeans, azuki beans, broad beans, green peas and peanuts; fruit trees and fruits such as apples, mandarin oranges, oranges, lemons, limes, grapefruits, Chinese quinces, quinces, pears, European pears, Japanese pears, grapes, blueberries, cranberries, blackberries, raspberries, strawberries, peaches, Japanese plums, nectarines, Japanese apricots, cherries, apricots, prunes, walnuts, hazelnuts, almonds, pistachio nuts, cashew nuts, macadamia nuts, bananas, persimmons, olives, loquats, date palms, coconut palms and oil palms; vegetables such as cabbages, tomatoes, spinach, broccoli, lettuce, onions, welsh onions, green peppers, eggplants, kohlrabi, Chinese cabbages, leaf mustard, cauliflower, garland chrysanthemum, artichoke, asparagus, carrots, parsley, celery, parsnips and chard; root vegetables such as carrots, burdock roots, potatoes, sweet potatoes, Japanese yam, taro, Japanese radishes, lotus roots and turnips; crops for processing such as cotton, hemp, paper mulberry, oriental paperbush, rapeseeds, oil palms, Barbados nuts, buckwheat, beet, hops, sugarcane, sugar beet, olives, rubber, coffee, tobacco, mulberry and tea; gourd such as Japanese pumpkins, cucumbers, zucchini, watermelons and melons; pasture grass such as orchard grass, sorghum, timothy, clover and alfalfa; lawn grass such as Japanese lawn grass, Korean lawn grass, Bermuda grass, redtop, creeping bentgrass, colonial bentgrass, Kentucky bluegrass, rough bluegrass, tall fescue, chewings fescue, creeping red fescue, annual ryegrass, perennial ryegrass, orchard grass and timothy grass; spice and aromatic crops such as lavender, rosemary, thyme, parsley, pepper, red pepper, Japanese horseradish, ginger, garlic, shiso, mint and basil; flowering plants such as rose, carnation, chrysanthemum, lisianthus, baby's breath, sunflower, gerbera, marigold, salvia, petunia, verbena, tulip, aster, gentian, lily, pansy, cyclamen, orchid, lily of the valley, lavender, stock, ornamental kale, primula, poinsettia, gladiolus, cattleya, daisy, verbena, cymbidium and begonia; and trees such as Japanese ash, birch, flowering dogwood, eucalyptus, ginkgo, lilac, maple, live oak, poplar, Chinese redbud, Chinese sweet gum, plane, Japanese zelkova, Japanese Thuja, Momi fir, southern Japanese hemlock, temple juniper, pine, spruce, Japanese yew, elm, buckeye, sweet viburnum, Buddhist pine, Japanese cedar, Japanese cypress, croton, Japanese spindle and Japanese photinia.

The "crops" include crops provided with a useful trait by a classical breeding technique and a recently advanced gene recombination technique, for example, genetically modified crops (e.g., herbicide-tolerant crops, insect pest-resistant transgenic crops producing insecticidal proteins, disease-resistant transgenic crops producing inducers of disease resistance, palatability-enhanced crops, long-term preservable crops, high-yield crops, etc.).

Exemplary crops provided with herbicide tolerance by a classical breeding technique include varieties of rapeseed, wheat, sunflower, rice and corn tolerant to the imidazolinone family of ALS-inhibiting herbicides such as imazethapyr, and such crops are sold under the trade name of Clearfield (registered trademark). Also included is a variety of soybean provided with tolerance to the sulfonyl urea family of ALS-inhibiting herbicides such as thifensulfuron-methyl by a classical breeding technique, and this is sold under the trade name of STS soybean. Also included are crops provided with tolerance to acetyl-CoA carboxylase inhibitors such as trione oxime herbicides and aryloxy phenoxy propionic acid herbicides by a classical breeding technique, for example, SR corn and the like.

Exemplary crops provided with herbicide tolerance by a gene recombination technique include glyphosate-tolerant varieties of corn, soybean, cotton, rapeseed and sugarbeet, and such crops are sold under the trade names such as Roundup Ready (registered trademark) and Agrisure GT. Also included are varieties of corn, soybean, cotton and rapeseed genetically engineered to be tolerant to glufosinate, and such crops are sold under the trade name of LibertyLink (registered trademark) etc. Also included is a variety of cotton genetically engineered to be tolerant to bromoxynil, and this is sold under the trade name of BXN.

Crops provided with tolerance to acetyl-CoA carboxylase inhibitors are described in Proc. Natl. Acad. Sci. USA, 87, 7175-7179 (1990), and the like. Further, acetyl-CoA carboxylase mutants resistant to acetyl-CoA carboxylase inhibitors are reported in Weed Science, 53, 728-746 (2005), and the like, and by introducing the gene of such an acetyl-CoA carboxylase mutant into crops by a gene recombination technique, or introducing a resistance-conferring mutation into acetyl-CoA carboxylase of crops, crops tolerant to acetyl-CoA carboxylase inhibitors can be engineered. Alternatively, by introducing a nucleic acid causing base substitution mutation into crop plant cells (a typical example of this technique is chimeraplasty technique (Gura T. 1999. Repairing the Genome's Spelling Mistakes. Science 285: 316-318.)) to allow site-specific substitution mutation in the amino acids encoded by an acetyl-CoA carboxylase gene of crops, crops tolerant to acetyl-CoA carboxylase inhibitors can be engineered.

The "crops" also include crops genetically engineered to synthesize insecticidal toxins etc. Exemplary insecticidal toxins expressed in such genetically modified crops include insecticidal proteins derived from Bacillus cereus or Bacillus popilliae; Bacillus thuringiensis-derived delta-endotoxins, such as Cry1Ab, Cry1Ac, Cry1F Cry1Fa2, Cry2Ab, Cry3A, Cry3Bb1 and Cry9C, and other insecticidal proteins, such as VIP1, VIP2, VIP3 and VIP3A; nematode-derived insecticidal proteins; toxins produced by animals, such as scorpion toxins, spider toxins, bee toxins and insect-specific neurotoxins; toxins of filamentous fungi; plant lectins; agglutinin; protease inhibitors, such as trypsin inhibitors, serine protease inhibitors, patatin, cystatin and papain inhibitors; ribosome inactivating proteins (RIP), such as ricin, maize RIP, abrin, saporin and bryodin; steroid metabolizing enzymes, such as 3-hydroxy steroid oxidase, ecdysteroid-UDP-glucosyltransferase and cholesterol oxidase; ecdysone inhibitors; HMG-CoA reductase; ion channel inhibitors, such as sodium channel inhibitors and calcium channel inhibitors; juvenile hormone esterase; diuretic hormone receptors; stilbene synthase; bibenzyl synthase; chitinase; and glucanase. Examples of the foregoing toxins and genetically modified crops capable of synthesizing these toxins are described in EP-A-0374753, WO 93/07278, WO 95/34656, EP-A-0427529, EP-A-451878, WO 03/052073, etc. The toxins contained in such genetically modified crops are suitable for control of pests, in particular, Coleopteran insect pests, Dipteran insect pests and Lepidopteran insect pests, and due to the toxins, the crops exhibit resistance to such pests.

Genetically modified crops which express one or more of the insecticidal toxins are already known, and some of them are commercially available. Examples of such genetically modified crops include YieldGard (registered trademark), which is a variety of corn expressing a Cry1Ab toxin; YieldGard Rootworm (registered trademark), which is a variety of corn expressing a Cry3Bb1 toxin; YieldGard Plus (registered trademark), which is a variety of corn expressing Cry1Ab and Cry3Bb1 toxins; Herculex I (registered trademark), which is a variety of corn expressing a Cry1Fa2 toxin and phosphinothricin N-acetyltransferase (PAT) for tolerance to glufosinate; NuCOTN33B (registered trademark) and Bollgard I (registered trademark), which are varieties of cotton expressing a Cry1Ac toxin; Bollgard II (registered trademark), which is a variety of cotton expressing Cry1Ac and Cry2Ab toxins; VIPCOT (registered trademark), which is a variety of cotton expressing a VIP toxin; NewLeaf (registered trademark), which is a variety of potato expressing a Cry3A toxin; NatureGard (registered trademark) Agrisure (registered trademark) GT Advantage (a GA21 glyphosate-tolerant trait), Agrisure (registered trademark) CB Advantage (a Bt11 corn borer (CB) trait); and Protecta (registered trademark).

Further, the "crops" also include crops genetically engineered to produce selectively acting anti-pathogenic substances. Examples of the anti-pathogenic substances include PR proteins (PRPs; described in EP-A-0392225); ion channel inhibitors, such as sodium channel inhibitors and calcium channel inhibitors (for example, KP1, KP4 and KP6 toxins, which are produced in viruses, are known); stilbene synthase; bibenzyl synthase; chitinase; glucanase; and substances produced by microbes, such as peptide antibiotics, heterocyclic antibiotics and plant disease resistance-related protein factors (referred to as plant disease resistance genes and described in WO 03/000906). Examples of the foregoing anti-pathogenic substances and genetically modified crops capable of producing these substances are described in EP-A-0392225, WO 95/33818, EP-A-0353191, etc.

Further, the "crops" also include crops provided with a useful trait such as an improved proportion of oil components and a higher amino acid content by a gene recombination technique. Examples of such crops include VISTIVE (registered trademark), which is a variety of soybean engineered to have a reduced linolenic acid content, and high-lysine (or high-oil) corn, which is a variety of corn engineered to have an increased content of lysine or oil.

Furthermore, the "crops" also include stacked varieties with a combination of two or more selected from the above-described classical herbicide-tolerant traits, herbicide-tolerant genes, insecticidal pest-resistance genes, anti-pathogenic substance-producing genes and useful traits including an improved proportion of oil components and a higher amino acid content. When the agricultural and horticultural insecticide composition of the present invention is used for crops modified to be tolerant to a herbicide, systematic and/or mixed treatment with the herbicide (for example, glyphosate or its salts, glufosinate or its salts, dicamba or its salts, imazethapyr or its salts, isoxaflutole, etc.) and the agricultural and horticultural insecticide composition of the present invention can control weeds and insect pests in an integrated manner.

In the use of the agricultural and horticultural insecticide composition of the present invention, the above-described formulation(s) containing an active ingredient(s) is/are optionally diluted or suspended in water etc., and insect pests are directly treated with, or target crops potentially infested with the insect pests, seeds of the target crops, soil or cultivation medium for planting the seeds, or the like are treated with the optionally diluted or suspended formulation (s) in an amount (s) effective for insect pest control according to a usual method. Examples of the treatment method include spray treatment of foliage etc., treatment of nursery boxes for paddy rice, seed treatment such as dust coating, dipping and disinfection of seeds, planting hole treatment, plant foot treatment, planting row treatment, drench treatment and soil incorporation treatment. Also included is treatment of water culture media in hydroponics.

The seed treatment may be performed in a usual manner. The exemplary methods include dipping of seeds in a diluted or undiluted fluid of a liquid or solid formulation for the permeation of agrochemicals into the seeds; mixing, dust coating or other treatment of seeds with a liquid or solid formulation for the adherence of agrochemicals onto the surfaces of the seeds; monolayer or multilayer coating of seeds with a mixture of a liquid or solid formulation and a highly adhesive carrier such as resins and polymers; and application of a liquid or solid formulation to the vicinity of seeds at the same time as seeding. The term "seed" used in the seed treatment is, in a broad sense, synonymous with a plant body used for propagation. The examples include, in addition to a so-called seed, a plant body for vegetative propagation, such as a bulb, a tuber, a seed potato, a discoid stem and a stem used for cuttage.

In the method of the present invention, the term "soil" or "cultivation medium" refers to support medium for plant cultivation and the materials are not particularly limited as long as plants can grow. Examples of the support medium include so-called soils of various kinds, seedling mats and water, and also include sand, vermiculite, cotton, paper, diatomite, agar, gelatinous substances, high-molecular-weight substances, rock wool, glass wool, wood chip, bark and pumice.

Exemplary methods of soil application include application of a water-diluted or undiluted liquid or solid formulation to the vicinity of planting points, nursery beds for seedlings, or the like; application of a granule to the vicinity of planting points or nursery beds; application of a dust, a wettable powder, a water-dispersible granule, a granule or the like onto soil and subsequent incorporation of the formulation into the whole soil before seeding or transplanting; and application of a dust, a wettable powder, a water-dispersible granule, a granule or the like to planting holes, planting rows or the like before seeding or planting.

To nursery boxes for paddy rice, for example, a dust, a water-dispersible granule, a granule or the like can be applied, although the suitable formulation may vary depending on the application time, in other words, depending on the cultivation stage such as seeding time, greening period and planting time. In the soil application, a formulation such as a dust, a water-dispersible granule, a granule or the like may be mixed with soil. For example, such a formulation is incorporated into bed soil, covering soil or the whole soil. Simply, soil and such a formulation may be alternately layered. In the application at the seeding time, the timing of the application may be before, at the same time as, or after seeding, or after covering with soil. In the case of paddy rice, submerged application of a granule etc. to a paddy field is often performed.

For field crops, such as potato, sweet potato and soybean, preferred is treatment of their seeds, cultivation media in the vicinity of plants, or the like in the period of seeding to seedling culture. For plants of which the seeds are directly sown in the field, in addition to direct seed treatment, treatment of cultivation media in the vicinity of plants or the like during cultivation is preferable. Specifically, the treatment can be performed by, for example, applying a granule onto soil, or drenching soil with a formulation in a water-diluted or undiluted liquid form.

In the case of culture plants to be transplanted, examples of the treatment in the period of seeding to seedling culture include, in addition to direct seed treatment, drench treatment of nursery beds for seedlings with a formulation in a liquid form; and granule application to nursery beds for seedlings. Also included are treatment of planting holes with a granule; and incorporation of a granule into cultivation media in the vicinity of planting points at the time of fix planting.

For the above-described treatment, a flubendiamide single formulation and a tolfenpyrad single formulation can be used after mixed with each other on site, and such a use can also produce the desired insecticidal effect. Alternatively, for the above-described treatment, the two single formulations can be separately used in the same period, and such a use can also produce the desired insecticidal effect. The term "the same period" does not mean that treatments with the two single formulations are performed at the exact same time, and in the case where treatments with the two single formulations are performed within a time frame of about one week, the treatments can be regarded as being performed "in the same period." Further, each treatment can be performed by a different method. Alternatively, for the above-described treatment, the two single formulations can be separately used at a given interval, and such a use can also produce the desired insecticidal effect. The interval between the treatments is not particularly limited as long as the effect of the present invention can be exerted, but in general, the interval is preferably 3 months or less, and particularly preferably 2 months or less. In this case, the first treatment may be performed with any of the active ingredients and each treatment may be performed by a different method.

In recent years, IPM (integrated pest management) technology using insect sex pheromones (e.g., communication disrupting agents against Tortricidae and Hadeninae, etc.), natural enemy insects, etc. has made progress, and this technology and the composition of the present invention can be used in combination or used systematically.

The amount of the agricultural and horticultural insecticide composition used for treatment may vary with various factors, for example, the purpose, the target insect pest, the crop growing conditions, the weather, the environmental conditions, the formulation, the application method, the application site, the application time, etc., but for example, the amounts of the active ingredient compounds are as follows: in the case of spray treatment, 1 to 200 g/ha of flubendiamide and 10 to 500 g/ha of tolfenpyrad are applied to target crops; and in the case of soil treatment or drench treatment, 1 to 100 g/ha of flubendiamide and 5 to 300 g/ha of tolfenpyrad are applied onto or infiltrated into the surrounding soil of target crops.

The agricultural and horticultural insecticide composition of the present invention is suitable for controlling a variety of insect pests which may damage paddy rice, vegetables, fruits, other flowering plants, etc. The insect pests to be controlled are, for example, agricultural and forest pests, horticultural pests, stored grain pests, sanitary pests, nematodes, etc. The specific examples include the following:

species of the Order Lepidoptera such as Parasa *consocia, Anomis mesogona, Papilio xuthus, Matsumuraeses azukivora, Ostrinia scapulalis, Spodoptera exempta, Hyphantria cunea, Ostrinia furnacalis, Pseudaletia separata, Tinea translucens, Bactra furfurana, Parnara guttata, Marasmia exigua, Parnara guttata, Sesamia inferens, Brachmia triannulella, Monema flavescens, Trichoplusia ni, Pleuroptya ruralis, Cystidia couaggaria, Lampides boeticus, Cephonodes hylas, Helicoverpa armigera, Phalerodonta manleyi, Eumeta japonica, Pieris brassicae, Malacosoma neustria testacea,*

*Stathmopoda masinissa, Cuphodes diospyrosella, Archips xylosteanus, Agrotis segetum, Tetramoera schistaceana, Papilio machaon hippocrates, Endoclyta sinensis, Lyonetia prunifoliella, Phyllonorycter ringoneella, Cydia kurokoi, Eucoenogenes aestuosa, Lobesia botrana, Latoia sinica, Euzophera batangensis, Phalonidia mesotypa, Spilosoma imparilis, Glyphodes pyloalis, Olethreutes mori, Tineola bisselliella, Endoclyta excrescens,*

*Nemapogon granellus, Synanthedon hector, Cydia pomonella, Plutella xylostella, Cnaphalocrocis medinalis, Sesamia calamistis, Scirpophaga incertulas, Pediasia teterrellus, Phthorimaea operculella, Stauropus fagi persimilis, Etiella zinckenella, Spodoptera exigua, Palpifer sexnotata, Spodoptera manuritia, Scirpophaga innotata, Xestia c-nigrum, Spodoptera depravata, Ephestia kuehniella, Angerona prunaria, Clostera anastomosis, Pseudoplusia includens, Matsumuraeses falcana, Helicoverpa assulta, Autographa nigrisigna, Agrotis ipsilon, Euproctis pseudoconspersa, Adoxophyes orana, Caloptilia theivora, Homona magnanima,*

*Ephestia elutella, Eumeta minuscula, Clostera anachoreta, Heliothis maritima, Sparganothis pilleriana, Busseola fusca, Euproctis subflava, Biston robustum, Heliothis zea, Aedia leucomelas, Narosoideus flavidorsalis, Viminia rumicis, Bucculatrix pyrivorella, Grapholita molesta, Spulerina astaurota, Ectomyelois pyrivorella, Chilo suppressalis, Acrolepiopsis sapporensis, Plodia interpunctella, Hellula undalis, Sitotroga ceralella, Spodoptera litura,* a species of the family Tortricidae *(Eucosma aporema), Acleris comariana, Scopelodes contracus, Orgyia thyellina, Spodoptera frugiperda, Ostrinia zaguliaevi, Naranga aenescens, Andraca bipunctata, Paranthrene regalis, Acosmeryx castanea, Phyllocnistis toparcha, Endopiza viteana, Eupoecillia ambiguella, Anticarsia gemmatalis, Cnephasia cinereipalpana, Lymantria dispar, Dendrolimus spectabilis, Leguminivora glycinivorella, Maruca testulalis, Matsumuraeses phaseoli, Caloptilia soyella, Phyllocnistis citrella, Hadylepta indicata, Archips fuscocupreanus, Acanthoplusia agnata, Bambalina* sp., *Carposina niponensis, Conogethes punctiferalis, Synanthedon* sp., *Lyonetia clerkella,*

*Papilio helenus, Colias erate poliographus, Phalera flavescens,* species of the family Pieridae such as *Pieris rapae, Euproctis similis, Acrolepiopsis suzukiella, Ostrinia nubilalis, Mamestra brassicae, Ascotis selenaria, Phtheochroides clandestina, Hoshinoa adumbratana, Odonestis pruni japonensis, Triaena intermedia, Adoxophyes orana fasciata, Grapholita inopinata, Spilonota ocellana, Spilonota lechriaspis, Illiberis pruni, Argyresthia conjugella, Caloptilia zachrysa, Archips breviplicanus, Anomis flava, Pectinophora gossypiella, Notarcha derogata, Diaphania indica, Heliothis virescens* and *Earias cupreoviridis;*

species of the Order Hemiptera such as *Nezara antennata, Stenotus rubrovittatus, Graphosoma rubrolineatum, Trigonotylus coelestialium, Aeschynteles maculatus, Creontiades pallidifer, Dysdercus cingulatus, Chrysomphalus ficus, Aonidiella aurantii, Graptopsaltria nigrofuscata, Blissus leucopterus, Icerya purchasi, Piezodorus hybneri, Lagynotomus elongatus, Thaia subrufa, Scotinophara lurida, Sitobion ibarae, Stariodes iwasakii, Aspidiotus destructor, Taylorilygus pallidulus, Myzus mumecola, Pseudaulacaspis prunicola, Acyrthosiphon pisum, Anacanthocoris striicornis, Ectometopterus micantulus, Eysarcoris lewisi,*

*Molipteryx fulginosa, Cicadella viridis, Rhopalosophum rufiabdominalis, Saissetia oleae, Trialeurodes vaporariorum, Aguriahana quercus, Lygus* sp., *Euceraphis punctipennis, Andaspis kashicola, Coccus pseudomagnoliarum, Cavelerius saccharivorus, Galeatus spinifrons, Macrosiphoniella sanborni, Aonidiella citrina, Halyomorpha mista, Stephanitis fasciicarina, Trioza camphorae, Leptocorisa chinensis, Trioza quercicola, Uhlerites latius, Erythroneura comes, Paromius exguus, Duplaspidiotus claviger, Nephotettix nigropictus, Halticiellus insularis, Perkinsiella saccharicida, Psylla malivorella,*

*Anomomeura mori, Pseudococcus longispinis, Pseudaulacaspis pentagona, Pulvinaria kuwacola, Apolygus lucorum, Togo hemipterus, Toxoptera aurantii, Saccharicoccus sacchari, Geoica lucifuga, Numata muiri, Comstockaspis*

*perniciosa, Unaspis citri, Aulacorthum solani, Eysarcoris ventralis, Bemisia argentifolii, Cicadella spectra, Aspidiotus hederae, Liorhyssus hyalinus, Calophya nigridorsalis, Sogatella furcifera, Megoura crassicauda, Brevicoryne brassicae, Aphis glycines, Leptocorisa oratorius, Nephotettix virescens, Uroeucon formosanum, Cyrtopeltis tennuis, Bemisia tabaci, Lecanium persicae, Parlatoria theae, Pseudaonidia paeoniae, Empoasca onukii, Plautia stali, Dysaphis tulipae, Macrosiphum euphorbiae, Stephanitis pyrioides, Ceroplastes ceriferus, Parlatoria camelliae, Apolygus spinolai, Nephotettix cincticeps, Glaucias subpunctatus, Orthotylus flavosparsus, Rhopalosiphum maidis, Peregrinus maidis, Eysarcoris parvus, Cimex lectularius, Psylla abieti, Nilaparvata lugens, Psylla tobirae, Eurydema rugosum, Schizaphis piricola, Psylla pyricola, Parlatoreopsis pyri, Stephanitis sashi, Dysmicoccus wistariae, Lepholeucaspis japonica, Sappaphis piri, Lipaphis erysimi, Neotoxoptera formosana, Rhopalosophum nymphaeae,*

*Edwardsiana rosae, Pinnaspis aspidistrae, Psylla alni, Speusotettix subfusculus, Alnetoidia alneti, Sogatella panicicola, Adelphocoris lineolatus, Dysdercus poecilus, Parlatoria ziziphi, Uhlerites debile, Laodelphax striatellus, Eurydema pulchrum, Cletus trigonus, Clovia punctata, Empoasca* sp., *Coccus hesperidum, Pachybrachius luridus, Planococcus kraunhiae, Stenotus binotatus, Arboridia apicaris, Macrosteles fascifrons, Dolycoris baccarum, Adelphocoris triannulatus, Viteus vitifolii, Acanthocoris sordidus, Leptocorisa acuta,*

*Macropes obnubilus, Cletus punctiger, Riptortus clavatus, Paratrioza cockerelli, Aphrophora costalis, Lygus disponsi, Lygus saundersi, Crisicoccus pini, Empoasca abietis, Crisicoccus matsumotoi, Aphis craccivora, Megacopta punctatissimum, Eysarcoris guttiger, Lepidosaphes beckii, Diaphorina citri, Toxoptera citricidus, Planococcus citri, Dialeurodes citri, Aleurocanthus spiniferus, Pseudococcus citriculus, Zyginella citri, Pulvinaria citricola, Coccus discrepans, Pseudaonidia duplex, Pulvinaria aurantii, Lecanium corni, Nezara viridula, Stenodema calcaratum, Rhopalosiphum padi, Sitobion akebiae,*

*Schizaphis graminum, Sorhoanus tritici, Brachycaudus helichrysi, Carpocoris purpureipennis, Myzus persicae, Hyalopterus pruni, Aphis farinose yanagicola, Metasalis populi, Unaspis yanonensis, Mesohomotoma camphorae, Aphis spiraecola, Aphis pomi, Lepidosaphes ulmi, Psylla mali, Heterocordylus flavipes, Myzus malisuctus, Aphidonuguis mali, Orientus ishidai, Ovatus malicolens, Eriosoma lanigerum, Ceroplastes rubens* and *Aphis gossypii;*

species of the Order Coleoptera such as *Xystrocera globosa, Paederus fuscipes, Eucetonia roelofsi, Callosobruchus chinensis, Cylas formicarius, Hypera postica, Echinocnemus squameus, Oulema oryzae, Donacia provosti, Lissorhoptrus oryzophilus, Colasposoma dauricum, Euscepes postfasciatus, Epilachna varivestis, Acanthoscelides obtectus, Diabrotica virgifera virgifera, Involvulus cupreus, Aulacophora femoralis, Bruchus pisorum, Epilachna vigintioctomaculata, Carpophilus dimidiatus, Cassida nebulosa, Luperomorpha tunebrosa, Phyllotreta striolata, Psacothea hilaris, Aeolesthes chrysothrix,*

*Curculio sikkimensis, Carpophilus hemipterus, Oxycetonia jucunda, Diabrotica* sp., *Mimela splendens, Sitophilus zeamais, Tribolium castaneum, Sitophilus oryzae, Palorus subdepressus, Melolontha japonica, Anoplophora malasiaca, Neatus picipes, Leptinotarsa decemlineata, Diabrotica undecimpunctata howardi, Sphenophorus venatus, Crioceris quatuordecimpunctata, Conotrachelus nenuphar, Ceuthorhynchidius albosuturalis, Phaedon brassicae, Lasioderma serricorne, Sitona japonicus, Adoretus tenuimaculatus, Tenebrio molitor, Basilepta balyi, Hypera nigrirostris, Chaetocnema concinna, Anomala cuprea, Heptophylla picea, Epilachna vigintioctopunctata, Diabrotica longicornis, Eucetonia pilifera, Agriotes* spp.,

*Attagenus unicolor japonicus, Pagria signata, Anomala rufocuprea, Palorus ratzeburgii, Alphitobius laevigatus, Anthrenus verbasci, Lyctus brunneus, Tribolium confusum, Medythia nigrobilineata, Xylotrechus pyrrhoderus, Epitrix cucumeris, Tomicus piniperda, Monochamus alternans, Popillia japonica, Epicauta gorhami, Sitophilus zeamais, Rhynchites heros, Listroderes costirostris, Callosobruchus maculatus, Phyllobius armatus, Anthonomus pomorum, Linaeidea aenea* and *Anthonomus grandis;*

species of the Order Diptera such as *Culex pipiens pallens, Pegomya hyoscyami, Liriomyza huidobrensis, Musca domestica, Chlorops oryzae, Hydrellia sasakii, Agromyza oryzae, Hydrellia griseola, Ophiomyia phaseoli, Dacus cucurbitae, Drosophila suzukii, Rhacochlaena japonica, Muscina stabulans,* species of the family Phoridae such as *Megaselia spiracularis, Clogmia albipunctata, Tipula aino, Phormia regina, Culex tritaeniorhynchus, Anopheles sinensis, Hylemya brassicae,*

*Asphondylia* sp., *Delia platura, Delia antiqua, Rhagoletis cerasi, Culex pipiens molestus* Forskal, *Ceratitis capitata, Bradysia agrestis, Pegomya cunicularia, Liriomyza sativae, Liriomyza bryoniae, Chromatomyia horticola, Liriomyza chinensis, Culex quinquefasciatus, Aedes aegypti, Aedes albopictus, Liriomyza trifolii, Dacus dorsalis, Dacus tsuneonis, Sitodiplosis mosellana, Meromuza nigriventris, Anastrepha ludens* and *Phagoletis pomonella;*

species of the Order Hymenoptera such as *Pristomyrmex pungens,* species of the family Bethylidae, *Monomorium pharaosis, Pheidole noda, Athalia rosae, Dryocosmus kuriphilus, Formica fusca japonica,* species of the subfamily Vespinae, Athalia *infumata infumata, Arge pagana, Athalia japonica, Acromyrmex* spp., *Solenopsis* spp., *Arge mali* and *Ochetellus glaber;*

species of the Order Orthoptera such as *Homorocoryphus lineosus, Gryllotalpa* sp., *Oxya hyla intricata, Oxya yezoensis, Locusta migratoria, Oxya japonica, Homorocoryphus jezoensis* and *Teleogryllus emma;*

species of the Order Thysanoptera such as *Selenothrips rubrocinctus, Stenchaetothrips biformis, Haplothrips ac-*

*uleatus, Ponticulothrips diospyrosi, Thrips flavus, Anaphothrips obscurus, Liothrips floridensis, Thrips simplex, Thrips nigropilosus, Heliothrips haemorrhoidalis, Pseudodendrothrips mori, Microcephalothrips abdominalis, Leeuwenia pasanii, Litotetothrips pasaniae, Scirtothrips citri, Haplothrips chinensis, Mycterothrips glycines,*

*Thrips setosus, Scirtothrips dorsalis, Dendrothrips minowai, Haplothrips niger, Thrips tabaci, Thrips alliorum, Thrips hawaiiensis, Haplothrips kurdjumovi, Chirothrips manicatus, Frankliniella intonsa, Thrips coloratus, Franklinella occidentalis, Thrips palmi, Frankliniella lilivora* and *Liothrips vaneeckei;*

species of the Order Acari such as *Leptotrombidium akamushi, Tetranychus ludeni, Dermacentor variabilis, Tetranychus truncatus, Ornithonyssus bacoti, Demodex canis, Tetranychus viennensis, Tetranychus kanzawai,* species of the family Ixodidae such as *Rhipicephalus sanguineus, Cheyletus malaccensis, Tyrophagus putrescentiae, Dermatophagoides farinae, Latrodectus hasseltii, Dermacentor taiwanicus, Acaphylla theavagrans, Polyphagotarsonemus latus, Aculops lycopersici, Ornithonyssus sylvairum, Tetranychus urticae, Eriophyes chibaensis, Sacroptes scabiei, Haemaphysalis longicornis, Ixodes scapularis, Tyrophagus similis, Cheyletus eruditus, Panonychus citri, Cheyletus moorei, Brevipalpus phoenicis, Octodectes cynotis, Dermatophagoides ptrenyssnus, Haemaphysalis flava, Ixodes ovatus, Phyllocoptruta citri, Aculus schlechtendali, Panonychus ulmi, Amblyomma americanum* and *Dermanyssus gallinae;*

species of the Order Isoptera such as *Reticulitermes miyatakei, Incisitermes minor, Coptotermes formosanus, Hodotermopsis japonica, Reticulitermes* sp., *Reticulitermes flaviceps amamianus, Glyptotermes kushimensis, Coptotermes guangzhoensis, Neotermes koshunensis, Glyptotermes kodamai, Glyptotermes satsumensis, Cryptotermes domesticus, Odontotermes formosanus, Glyptotermes nakajimai, Pericapritermes nitobei* and *Reticulitermes speratus;*

species of the Order Blattodea such as *Periplaneta fuliginosa, Blattella germanica, Blatta orientalis, Periplaneta brunnea, Blattella lituricollis, Periplaneta japonica* and *Periplaneta americana;*

species of the Order Siphonaptera such as *Pulex irritans, Ctenocephalides felis* and *Ceratophyllus gallinae;*

species of the Phylum Nematoda such as *Nothotylenchus acris, Aphelenchoides besseyi, Pratylenchus penetrans, Meloidogyne hapla, Meloidogyne incognita, Globodera rostochiensis, Meloidogyne javanica, Heterodera glycines, Pratylenchus coffeae, Pratylenchus neglectus* and *Tylenchus semipenetrans;* and

species of the Phylum Mollusca such as *Pomacea canaliculata, Achatina fulica, Meghimatium bilineatum, Lehmannina valentiana, Limacus flavus* and *Acusta despecta sieboldiana.* Other agricultural and horticultural insect pests to be controlled are, for example, *Tuta absoluta* and the like.

The agricultural and horticultural insecticide composition of the present invention can be used simultaneously with agricultural and horticultural microbicides, agricultural and horticultural insecticides, agricultural and horticultural herbicides, synergists, phytotoxicity reducers, etc. for control of diseases/insect pests, weeds, etc. which may spread in the application period of the composition of the present invention, enhanced effects and reduced phytotoxicity to crops. Non-limiting examples of typical compounds used as the agricultural and horticultural microbicides, the agricultural and horticultural insecticides, the agricultural and horticultural herbicides, the synergists or the phytotoxicity reducers are listed below.

Examples of the agricultural and horticultural microbicides include aureofungin, azaconazole, azithiram, acypetacs, acibenzolar, acibenzolar-S-methyl, azoxystrobin, anilazine, amisulbrom, ampropylfos, ametoctradin, allyl alcohol, aldimorph, amobam, isotianil, isovaledione, isopyrazam, isofetamid, isoprothiolane, ipconazole, iprodione, iprovalicarb, iprobenfos, imazalil, iminoctadine, iminoctadine-albesilate, iminoctadine-triacetate, imibenconazole, uniconazole, uniconazole-P, echlomezole, edifenphos, etaconazole, ethaboxam, ethirimol, etem, ethoxyquin, etridiazole, enestroburin, epoxiconazole, oxadixyl, oxycarboxin, copper-8-quinolinolate, oxytetracycline, copper-oxinate, oxpoconazole, oxpoconazole-fumarate, oxolinic acid, octhilinone, ofurace, orysastrobin, metam-sodium,

kasugamycin, carbamorph, carpropamid, carbendazim, carboxin, carvone, quinazamid, quinacetol, quinoxyfen, chinomethionat, quinomethionate, captafol, captan, kiralaxyl, quinconazole, quintozene, guazatine, cufraneb, cuprobam, glyodin, griseofulvin, climbazole, cresol, kresoxim-methyl, chlozolinate, clotrimazole, chlobenthiazone, chloraniformethan, chloranil, chlorquinox, chloropicrin, chlorfenazole, chlorodinitronaphthalene, chlorothalonil, chloroneb, salicylanilide, zarilamid, cyazofamid, diethyl pyrocarbonate, diethofencarb, cyclafuramid, diclocymet, dichlozoline, diclobutrazol, dichlofluanid, cycloheximide, diclomezine, dicloran, dichlorophen, dichlone, disulfiram, ditalimfos, dithianon, diniconazole,

diniconazole-M, zineb, dinocap, dinocton, dinosulfon, dinoterbon, dinobuton, dinopenton, dipyrithione, diphenylamine, difenoconazole, cyflufenamid, diflumetorim, cyproconazole, cyprodinil, cyprofuram, cypendazole, simeconazole, dimethirimol, dimethomorph, cymoxanil, dimoxystrobin, methyl bromide, ziram, silthiofam, streptomycin, spiroxamine, sultropen, sedaxane, zoxamide, dazomet, thiadiazin, tiadinil, thiadifluor, thiabendazole, tioxymid, thioquinox, thiochlorfenphim, thiophanate, thiophanate-methyl, thicyofen, thifluzamide, thiram, decafentin, tecnazene, tecloftalam, tecoram, tetraconazole, debacarb, dehydroacetic acid, tebuconazole, tebufloquin, dodicin, dodine, dodecyl benzensulfonate bis-ethylene diamine copper(II) (DBEDC), dodemorph, drazoxolon, triadimenol, triadimefon, triazbutil, triazoxide, triamiphos, triarimol, trichlamide, tricyclazole, triticonazole, tridemorph, tributyltin oxide, triflumizole, trifloxystrobin, triforine, tolylfluanid, tolclofos-methyl, tolprocarb, natamycin, nabam, nitrostyrene, nitrothal-isopropyl, nuarimol, copper nonylphenol sulfonate, halacrinate, validamycin, valifenalate, harpin protein, bixafen, picoxystrobin, picobenzamide, bithionol, bitertanol, hydroxyisoxazole, hydroxyisoxazole-potassium, binapacryl, biphenyl, piperalin, hymexazol, pyraoxystrobin, pyracarbolid, pyraclostrobin, pyrazophos, pyrametostrobin, pyriofenone, pyridinitril, pyrifenox,

pyribencarb, pyrimethanil, pyroxychlor, pyroxyfur, pyroquilon, vinclozolin, ferbam, famoxadone, fenapanil, fenamidone, fenaminosulf, fenarimol, fenitropan, fenoxanil, ferimzone, fentin, fenpiclonil, fenpyrazamine, fenbuconazole, fenfuram, fenpropidin, fenpropimorph, fenhexamid, phthalide, buthiobate, butylamine, bupirimate, fuberidazole, blasticidin-S, furametpyr, furalaxyl, fluacrypyrim, fluazinam, fluoxastrobin, fluotrimazole, fluopicolide, fluopyram, fluoroimide, furcarbanil, fluxapyroxad, fluquinconazole, furconazole, furconazole-cis, fludioxonil, flusilazole, flusulfamide, flutianil, flutolanil, flutriafol, furfural, furmecyclox, flumetover, flumorph, proquinazid, prochloraz, procymidone, prothiocarb, prothioconazole, propamocarb, propiconazole, propineb, furophanate, probenazole, bromuconazole, hexachlorobutadiene, hexaconazole, hexylthiofos, bethoxazin, benalaxyl, benalaxyl-M, benodanil, benomyl, pefurazoate, benquinox, penconazole, benzamorf, pencycuron, benzohydroxamic acid, bentaluron, benthiazole, benthiavalicarb, benthiavalicarb-isopropyl, penthiopyrad, penflufen, boscalid, phosdiphen, fosetyl, fosetyl-Al, polyoxins, polyoxorim, polycarbamate, folpet, formaldehyde, machine oil, maneb, mancozeb, mandipropamid, myclozolin, myclobutanil, mildiomycin, milneb, mecarbinzid, methasulfocarb, metazoxolon, metam, metam-sodium, metalaxyl, metalaxyl-M, metiram, methyl isothiocyanate, meptyldinocap, metconazole, metsulfovax, methfuroxam, metominostrobin, metrafenone, mepanipyrim, mefenoxam, meptyldinocap, mepronil, mebenil, iodomethane, rabenzazole, benzalkonium chloride, inorganic microbicides such as basic copper chloride, basic copper sulfate and silver, sodium hypochlorite, cupric hydroxide, wettable sulfur, calcium polysulfide, potassium hydrogen carbonate, sodium hydrogen carbonate, sulfur, copper sulfate anhydride, nickel dimethyldithiocarbamate, oxine copper, zinc sulfate and copper sulfate pentahydrate.

Examples of the agricultural and horticultural insecticides include 3,5-xylyl methylcarbamate (XMC), crystalline protein toxins produced by *Bacillus thuringiensis* such as *Bacillus thuringiensis* aizawai, *Bacillus thuringiensis* israelensis, *Bacillus thuringiensis* japonensis, *Bacillus thuringiensis* kurstaki and *Bacillus thuringiensis* tenebrionis, BPMC, Bt toxin-derived insecticidal compounds, CPCBS (chlorfenson), DCIP (dichlorodiisopropyl ether), D-D (1,3-dichloropropene), DDT, NAC, O-4-dimethylsulfamoylphenyl O,O-diethyl phosphorothioate (DSP), O-ethyl O-4-nitrophenyl phenylphosphonothioate (EPN), tripropylisocyanurate (TPIC), acrinathrin, azadirachtin, azinphos-methyl, acequinocyl, acetamiprid, acetoprole, acephate, abamectin, afidopyropen, avermectin-B, amidoflumet, amitraz, alanycarb, aldicarb, aldoxycarb, aldrin, alpha-endosulfan, alpha-cypermethrin, albendazole, allethrin, isazofos, isoamidofos, isoxathion, isofenphos, isoprocarb (MIPC), ivermectin, imicyafos, imidacloprid, imiprothrin, indoxacarb, esfenvalerate, ethiofencarb, ethion, ethiprole, etoxazole, ethofenprox, ethoprophos, etrimfos, emamectin, emamectin-benzoate, endosulfan, empenthrin, oxamyl, oxydemeton-methyl, oxydeprofos (ESP), oxibendazole, oxfendazole, potassium oleate, sodium oleate, cadusafos, cartap, carbaryl, carbosulfan, carbofuran, gamma-cyhalothrin, xylylcarb, quinalphos, kinoprene, chinomethionat, cloethocarb, clothianidin, clofentezine, chromafenozide, chlorantraniliprole, chlorethoxyfos, chlordimeform, chlordane, chlorpyrifos, chlorpyrifos-methyl, chlorphenapyr, chlorfenson, chlorfenvinphos, chlorfluazuron, chlorobenzilate, chlorobenzoate,

kelthane (dicofol), salithion, cyanophos (CYAP), diafenthiuron, diamidafos, cyantraniliprole, theta-cypermethrin, dienochlor, cyenopyrafen, dioxabenzofos, diofenolan, sigma-cypermethrin, dichlofenthion (ECP), cycloprothrin, disulfoton, dinotefuran, cyhalothrin, cyphenothrin, cyfluthrin, diflubenzuron, cyflumetofen, diflovidazin, cyhexatin, cypermethrin, dimethylvinphos, dimethoate, dimefluthrin, silafluofen, cyromazine, spinetoram, spinosad, spirodiclofen, spirotetramat, spiromesifen, sulfluramid, sulprofos, sulfoxaflor, zeta-cypermethrin, diazinon,

tau-fluvalinate, dazomet, thiacloprid, thiamethoxam, thiodicarb, thiocyclam, thiosultap, thiosultap-sodium, thionazin, thiometon, deet, dieldrin, tetrachlorvinphos, tetradifon, tetramethylfluthrin, tetramethrin, tebupirimfos, tebufenozide, tebufenpyrad, tefluthrin, teflubenzuron, demeton-S-methyl, temephos, deltamethrin, terbufos, tralopyril, tralomethrin, transfluthrin, triazamate, triazuron, trichlamide, trichlorphon (DEP), triflumuron, tolfenpyrad, naled (BRP), nithiazine, nitenpyram, novaluron, noviflumuron, hydroprene, vaniliprole, vamidothion, parathion, parathion-methyl, halfenprox, halofenozide,

bistrifluron, bisultap, hydramethylnon, hydroxy propyl starch, binapacryl, bifenazate, bifenthrin, pyflubumide, pymetrozine, pyraclofos, pyrafluprole, pyridafenthion, pyridaben, pyridalyl, pyrifluquinazon, pyriprole, pyriproxyfen, pirimicarb, pyrimidifen, pirimiphos-methyl, pyrethrins, fipronil, fenazaquin, fenamiphos, phenisobromolate, fenitrothion (MEP), fenoxycarb, fenothiocarb, phenothrin, fenobucarb, fensulfothion, fenthion (MPP), phenthoate (PAP), fenvalerate, fenpyroximate, fenpropathrin, fenbendazole, butathiofos, buprofezin, furathiocarb, prallethrin, fluacrypyrim, fluazinam, fluazuron,

fluensulfone, flucycloxuron, flucythrinate, fluvalinate, flupyradifurone, flupyrazofos, flufiprole, flufenerim, flufenoxuron, flufenzine, flufenprox, fluproxyfen, flubrocythrinate, flumethrin, flurimfen, prothiofos, protrifenbute, flonicamid, propaphos, propargite (BPPS), profluthrin, propoxur (PHC), flometoquin, bromopropylate, beta-cyfluthrin, hexaflumuron, hexythiazox, heptenophos, permethrin, benclothiaz, bendiocarb, bensultap, benzoximate, benfuracarb, phoxim, phosalone, fosthiazate, fosthietan, phosphamidon, phosphocarb, phosmet (PMP), polynactins, formetanate, formothion, phorate, machine oil,

malathion, milbemycin, milbemycin-A, milbemectin, mecarbam, mesulfenfos, methomyl, metaldehyde, metaflumizone, methamidophos, metam-ammonium, metam-sodium, methiocarb, methidathion (DMTP), methylisothiocyanate, methylneodecanamide, methylparathion, metoxadiazone, methoxychlor, methoxyfenozide, metofluthrin, methoprene, metolcarb, meperfluthrin, mevinphos, monocrotophos, monosultap, lambda-cyhalothrin, ryanodine, lufenuron, resmethrin, lepimectin, rotenone, levamisole hydrochloride, fenbutatin oxide, morantel tartarate, methyl bromide, tricyclohexyltin hydroxide (cyhexatin), calcium cyanamide, calcium polysulfide, sulfur and nicotine-sulfate.

Examples of the agricultural and horticultural herbicides include 1-naphthylacetamide, 2,4-PA, 2,3,6-TBA, 2,4,5-T, 2, 4, 5-TB, 2, 4-D, 2, 4-DB, 2, 4-DEB, 2, 4-DEP, 3, 4-DA, 3, 4-DB, 3,4-DP, 4-CPA (4-chlorophenoxyacetic acid), 4-CPB, 4-CPP, MCP, MCPA, MCPA-thioethyl, MCPB, ioxynil, aclonifen, azafenidin, acifluorfen, aziprotryne, azimsulfuron, asulam, acetochlor, atrazine, atraton, anisuron, anilofos, aviglycine, abscisic acid, amicarbazone, amidosulfuron, amitrole, aminocyclopyrachlor, aminopyralid, amibuzin, amiprophos-methyl, ametridione, ametryn, alachlor, allidochlor, alloxydim, alorac, iofensulfuron, isouron, isocarbamid, isoxachlortole, isoxapyrifop, isoxaflutole, isoxaben, isocil, isonoruron, isoproturon, isopropalin, isopolinate, isomethiozin, inabenfide, ipazine, ipfencarbazone, iprymidam, imazaquin, imazapic, imazapyr, imazamethapyr, imazamethabenz, imazamethabenz-methyl, imazamox, imazethapyr, imazosulfuron, indaziflam, indanofan, indolebutyric acid, uniconazole-P, eglinazine, esprocarb, ethametsulfuron, ethametsulfuron-methyl, ethalfluralin, ethiolate, ethychlozate-ethyl, ethidimuron, etinofen, ethephon, ethoxysulfuron, ethoxyfen, etnipromid, ethofumesate, etobenzanid, epronaz, erbon, endothal, oxadiazon, oxadiargyl, oxaziclomefone, oxasulfuron, oxapyrazon, oxyfluorfen, oryzalin,

orthosulfamuron, orbencarb, cafenstrole, cambendichlor, carbasulam, carfentrazone, carfentrazone-ethyl, karbutilate, carbetamide, carboxazole, quizalofop, quizalofop-P, quizalofop-ethyl, xylachlor, quinoclamine, quinonamid, quinclorac, quinmerac, cumyluron, clacyfos, cliodinate, glyphosate, glufosinate, glufosinate-P, credazine, clethodim, cloxyfonac, clodinafop, clodinafop-propargyl, clopyralid, cloproxydim, cloprop, clofop, clomazone, chlomethoxynil, chlomethoxyfen, clomeprop, chlorazifop, chlorazine, chloranocryl, chloramben, cloransulam,

cloransulam-methyl, chloridazon, chlorimuron, chlorimuron-ethyl, chlorsulfuron, chlorthal, chlorthiamid, chlortoluron, chlornitrofen, chlorfenac, chlorfenprop, chlorbufam, chlorflurazole, chlorflurenol, chlorprocarb, chlorpropham, chlorbromuron, chlormequat, chloreturon, chloroxynil, chloroxuron, chlorotoluron, chloropon, saflufenacil, cyanazine, cyanatryn, di-allate, diuron, diethamquat, dicamba, cycluron, cycloate, cycloxydim, diclosulam, cyclosulfamuron, dichlorprop, dichlorprop-P, dichlobenil, diclofop, diclofop-methyl, dichlormate, dichloralurea, diquat, cisanilide, disul, siduron, dithiopyr, dinitramine, cinidon-ethyl,

dinosam, cinosulfuron, dinoseb, dinoterb, dinofenate, dinoprop, cyhalofop-butyl, diphenamid, difenoxuron, difenopenten, difenzoquat, cybutryne, cyprazine, cyprazole, diflufenican, diflufenzopyr, dipropetryn, cypromid, cyperquat, gibberellin, simazine, dimidazon, dimexano, dimethachlor, dimethametryn, dimethenamid, simetryn, simeton, dimepiperate, dimefuron, cinmethylin, swep, sulglycapin, sulcotrione, sulfallate, sulfentrazone, sulfosulfuron, sulfometuron, sulfometuron-methyl, secbumeton, sethoxydim, sebuthylazine, terbacil, daimuron, dazomet, dalapon, thiazafluron, thiazopyr, thiencarbazone, thiencarbazone-methyl, tiocarbazil, tioclorim, thiobencarb, thidiazimin, thidiazuron, thifensulfuron, thifensulfuron-methyl, desmedipham, desmetryn, tetrafluron, thenylchlor, tebutam, tebuthiuron, terbumeton, tepraloxydim, tefuryltrione, tembotrione, delachlor, terbacil, terbucarb, terbuchlor, terbuthylazine, terbutryn, topramezone, tralkoxydim, triaziflam, triasulfuron, triafamone, tri-allate, trietazine, tricamba, triclopyr, tridiphane, tritac, tritosulfuron, triflusulfuron, triflusulfuron-methyl, trifluralin, trifloxysulfuron, tripropindan,

tribenuron, tribenuron-methyl, trifop, trifopsime, trimeturon, naptalam, naproanilide, napropamide, nicosulfuron, nitralin, nitrofen, nitrofluorfen, nipyraclofen, neburon, norflurazon, noruron, barban, paclobutrazol, paraquat, parafluron, haloxydine, haloxyfop, haloxyfop-P, haloxyfop-methyl, halosafen, halosulfuron, halosulfuron-methyl, bilanafos, picloram, picolinafen, bicyclopyrone, bispyribac, bispyribac-sodium, pydanon, pinoxaden, bifenox, piperophos, hymexazol, pyraclonil, pyrasulfotole, pyrazoxyfen, pyrazosulfuron, pyrazosulfuron-ethyl, pyrazolate, bilanafos, pyraflufen-ethyl, pyriclor, pyridafol,

pyrithiobac, pyrithiobac-sodium, pyridate, pyriftalid, pyributicarb, pyribenzoxim, pyrimisulfan, primisulfuron, pyriminobac-methyl, pyroxasulfone, pyroxsulam, fenasulam, phenisopham, fenuron, fenoxasulfone, fenoxaprop, fenoxaprop-P, fenoxaprop-ethyl, phenothiol, fenoprop, phenobenzuron, fenthiaprop, fenteracol, fentrazamide, phenmedipham, phenmedipham-ethyl, butachlor, butafenacil, butamifos, buthiuron, buthidazole, butylate, buturon, butenachlor, butroxydim, butralin, butroxydim, flazasulfuron, flamprop, furyloxyfen, prynachlor, primisulfuron-methyl, fluazifop, fluazifop-P, fluazifop-butyl,

fluazolate, fluroxypyr, fluothiuron, fluometuron, fluoroglycofen, flurochloridone, fluorodifen, fluoronitrofen, fluoromidine, flucarbazone, flucarbazone-sodium, fluchloralin, flucetosulfuron, fluthiacet, fluthiacet-methyl, flupyrsulfuron, flufenacet, flufenican, flufenpyr, flupropacil, flupropanate, flupoxam, flumioxazin, flumiclorac, flumiclorac-pentyl, flumipropyn, flumezin, flumetsulam, fluridone, flurtamone, fluroxypyr, pretilachlor, proxan, proglinazine, procyazine, prodiamine, prosulfalin, prosulfuron,

prosulfocarb, propaquizafop, propachlor, propazine, propanil, propyzamide, propisochlor, prohydrojasmon, propyrisulfuron, propham, profluazol, profluralin, prohexadione-calcium, propoxycarbazone, propoxycarbazone-sodium, profoxydim, bromacil, brompyrazon, prometryn, prometon, bromoxynil, bromofenoxim, bromobutide, bromobonil, florasulam, hexachloroacetone, hexazinone, pethoxamid, benazolin, penoxsulam, pebulate, beflubutamid, vernolate, perfluidone, bencarbazone, benzadox, benzipram, benzylaminopurine, benzthiazuron, benzfendizone, bensulide, bensulfuron-methyl, benzoylprop, benzobicyclon, benzofenap, benzofluor, bentazone, pentanochlor, benthiocarb, pendimethalin, pentoxazone, benfluralin, benfuresate, fosamine, fomesafen, foramsulfuron, forchlorfenuron, maleic hydrazide, mecoprop, mecoprop-P, medinoterb, mesosulfuron, mesosulfuron-methyl, mesotrione, mesoprazine, methoprotryne, metazachlor, methazole, metazosulfuron, methabenzthiazuron, metamitron, metamifop, metam, methalpropalin, methiuron, methiozolin, methiobencarb, methyldymron, metoxuron, metosulam, metsulfuron, metsulfuron-methyl, metflurazon, metobromuron, metobenzuron, methometon, metolachlor, metribuzin, mepiquat-chloride, mefenacet, mefluidide, monalide, monisouron, monuron, monochloroacetic acid, monolinuron, molinate, morfamquat, iodosulfuron, iodosulfuron-methyl-sodium, iodobonil, iodomethane, lactofen, linuron, rimsulfuron, lenacil, rhodethanil, calcium peroxide and methyl bromide.

Examples of the synergists include piperonyl butoxide, sesamex, sulfoxide, N-(2-ethylhexyl)-8,9,10-trinorborn-5-ene-2,3-dicarboximide (MGK 264), N-declyimidazole, WARF-antiresistant, TBPT, TPP, IBP, PSCP, methyl iodide, t-phenylbutenone, diethyl maleate, DMC, FDMC, ETP and ETN.

Examples of the phytotoxicity reducers include benoxacor, cloquintocet-mexyl, cyometrinil, daimuron, dichlormid, cyprosulfamide, fenchlorazole-ethyl, fenclorim, flurazole, fluxofenim, furilazole, mefenpyr-diethyl, MG191, oxabetrinil, allidochlor, isoxadifen-ethyl, cyprosulfamide, fluxofenim and 1,8-naphthalic anhydride.

EXAMPLES

Hereinafter, representative Examples and Test Examples in connection with the present invention are shown, but the present invention is not limited thereto. In Examples, the "part(s)" means a part(s) by mass.

Formulation Example 1. Emulsifiable concentrate

| | |
|---|---|
| Flubendiamide | 5 parts |
| Tolfenpyrad | 10 parts |
| Xylene | 65 parts |
| N-methyl pyrrolidone | 10 parts |
| Mixture of polyoxyethylene nonylphenyl ether and calcium alkylbenzene sulfonate | 10 parts |

The above ingredients are mixed and dissolved uniformly to give an emulsifiable concentrate.

Formulation Example 2. Dust

| | |
|---|---|
| Flubendiamide | 3 parts |
| Tolfenpyrad | 10 parts |
| Clay powder | 72 parts |
| Diatomite powder | 15 parts |

The above ingredients are uniformly mixed and then pulverized to give a dust.

Formulation Example 3. Granule

| | |
|---|---|
| Flubendiamide | 1 part |
| Tolfenpyrad | 2 parts |
| Mixture of bentonite powder and clay powder | 92 parts |

(continued)

| Calcium lignosulfonate | 5 parts |
|---|---|

The above ingredients are uniformly mixed. After addition of an appropriate volume of water, the mixture is kneaded, granulated and dried to give a granule.

Formulation Example 4. Wettable powder

| Flubendiamide | 5 parts |
|---|---|
| Tolfenpyrad | 15 parts |
| Kaolin and synthetic high-dispersion silicic acid | 75 parts |
| Mixture of polyoxyethylene nonylphenyl ether and calcium alkylbenzene sulfonate | 5 parts |

The above ingredients are uniformly mixed and then pulverized to give a wettable powder.

Formulation Example 5. Flowable

| Flubendiamide | 5 parts |
|---|---|
| Tolfenpyrad | 25 parts |
| Sorpol 3105 (manufactured by Toho Chemical Industry Co., Ltd. Japan) | 5 parts |
| Propylene glycol | 5 parts |
| Rhodopol 23 (manufactured by Rhone-Poulenc S.A.) | 2 parts |
| Water | 58 parts |

The above ingredients are uniformly mixed and then dispersed in water to give a flowable.

Test Example 1.

Tests of insecticidal effect on *Plutella xylostella, Spodoptera exigua* and *Spodoptera litura*

In an experimental Chinese kale *(Brassica oleracea* var. *acephala)* field (sized 4 m x 5 m and planted with 800 plants per plot), foliar application was conducted with a water-diluted agrochemical solution (an amount equivalent to 750 L/ha) containing a predetermined dose of a flubendiamide 20% water-dispersible granule and/or a predetermined dose of a tolfenpyrad 15% emulsifiable concentrate at 4-day intervals, 8 times in total. In plots of *Plutella xylostella* or *Spodoptera litura,* 20 plants per plot were chosen at random, the number of surviving larvae was measured before the agrochemical treatment, at 4 days after the 5th agrochemical treatment and at 4 days after the 6th agrochemical treatment. With reference to the number of larvae before the agrochemical treatment, the control effect was calculated according to the formula shown below. In addition, the expected value for the control effect of the mixed use was calculated according to Colby's equation shown below. When the control effect of the mixed use is superior to the expected value, the mixed use is regarded as having not a mere additive effect but a synergistic effect. As for plots of *Spodoptera exigua,* the calculation was performed based on the measurements at 4 days after the 7th agrochemical treatment and at 4 days after the 8th agrochemical treatment.

$$Control\ effect = 100 - \{(Ta \times Cb)/(Tb \times Ca)\} \times 100$$

Ta = the number of larvae after the agrochemical treatment in a treatment plot
Tb = the number of larvae before the agrochemical treatment in a treatment plot
Ca = the number of larvae after the agrochemical treatment in a non-treatment plot
Cb = the number of larvae before the agrochemical treatment in a non-treatment plot

Colby's equation

$$E \ (expected \ value) = (X + Y) - (X \times Y/100)$$

X = the control effect of flubendiamide alone
Y = the control effect of tolfenpyrad alone

The results are shown in Tables 1 to 3. In each table, 4DAT5, 4DAT6, 4DAT7 and 4DAT8 are as defined below, and the a. i. stands for active ingredient.

4DAT5: the measurement at 4 days after the 5th agrochemical treatment
4DAT6 the measurement at 4 days after the 6th agrochemical treatment
4DAT7 the measurement at 4 days after the 7th agrochemical treatment
4DAT8 the measurement at 4 days after the 8th agrochemical treatment

Table 1

| Control effect on *Plutella xylostella* | | | | | | | | |
|---|---|---|---|---|---|---|---|---|
| Test agrochemical | Dose (g a.i./ha) | Number of larvae per plant | | | Control effect (%) | | Expected value (%) | |
| | | Before treatment | 4DAT5 | 4DAT6 | 4DAT5 | 4DAT6 | 4DAT5 | 4DAT6 |
| Flubendiamide Tolfenpyrad | 11.3 60 | 2.76 | 0.05 | 0.02 | 91.9 | 96.2 | 67.2 | 87.4 |
| Flubendiamide | 11.3 | 2.3 | 0.24 | 0.13 | 53.5 | 70.0 | - | - |
| Tolfenpyrad | 60 | 2.4 | 0.38 | 0.19 | 29.4 | 58.0 | - | - |
| Non-treatment | - | 2.81 | 0.63 | 0.53 | - | - | - | - |

Table 2

| Control effect on *Spodoptera exigua* | | | | | | | | |
|---|---|---|---|---|---|---|---|---|
| Test agrochemical | Dose (g a.i./ha) | Number of larvae per plant | | | Control effect (%) | | Expected value (%) | |
| | | Before treatment | 4DAT7 | 4DAT8 | 4DAT7 | 4DAT8 | 4DAT7 | 4DAT8 |
| Flubendiamide Tolfenpyrad | 11.3 60 | 1.32 | 0.01 | 0.01 | 84.5 | 93.0 | 37.6 | 62.2 |
| Flubendiamide | 11.3 | 0.98 | 0.03 | 0.04 | 37.6 | 62.2 | - | - |
| Tolfenpyrad | 60 | 1.08 | 0.06 | 0.13 | 0 | 0 | - | - |
| Non-treatment | - | 1.02 | 0.05 | 0.11 | - | - | - | - |

Table 3

| Control effect on *Spodoptera litura* | | | | | | | | |
|---|---|---|---|---|---|---|---|---|
| Test agrochemical | Dose (g a.i./ha) | Number of larvae per plant | | | Control effect (%) | | Expected value (%) | |
| | | Before treatment | 4DAT5 | 4DAT6 | 4DAT5 | 4DAT6 | 4DAT5 | 4DAT6 |
| Flubendiamide Tolfenpyrad | 11.3 60 | 0.33 | 0.13 | 0.04 | 66.6 | 90.8 | 3.9 | 37.8 |
| Flubendiamide | 11.3 | 0.38 | 0.43 | 0.31 | 3.9 | 37.8 | - | - |

(continued)

| Control effect on *Spodoptera litura* | | | | | | | | |
|---|---|---|---|---|---|---|---|---|
| Test agrochemical | Dose (g a.i./ha) | Number of larvae per plant | | | Control effect (%) | | Expected value (%) | |
| | | Before treatment | 4DAT5 | 4DAT6 | 4DAT5 | 4DAT6 | 4DAT5 | 4DAT6 |
| Tolfenpyrad | 60 | 0.11 | 0.25 | 0.53 | 0 | 0 | - | - |
| Non-treatment | - | 0.45 | 0.53 | 0.59 | - | - | - | - |

In each test, the control effect observed in the mixed treatment plot was greater than the expected effect (expected value) calculated from the effect observed in the flubendiamide treatment plot and the effect observed in the tolfenpyrad treatment plot.

**Claims**

1. An agricultural and horticultural insecticide composition comprising flubendiamide and tolfenpyrad as active ingredients.

2. The agricultural and horticultural insecticide composition according to claim 1, comprising 0.1 to 10 parts by mass of tolfenpyrad per part by mass of flubendiamide.

3. A method for using an agricultural and horticultural insecticide composition, comprising treating insect pests directly, treating crops potentially infested with the insect pests, or treating surrounding soil or cultivation medium of the crops with an effective amount of an agricultural and horticultural insecticide composition comprising flubendiamide and tolfenpyrad as active ingredients.

4. A method for controlling agricultural and horticultural insect pests, comprising treating insect pests directly, treating crops potentially infested with the insect pests, or treating surrounding soil or cultivation medium of the crops with an effective amount of an optionally diluted formulation containing flubendiamide as an active ingredient and an effective amount of an optionally diluted formulation containing tolfenpyrad as an active ingredient, the two formulations being used separately but in the same period.

5. A method for controlling agricultural and horticultural insect pests, comprising treating insect pests directly, treating crops potentially infested with the insect pests, or treating surrounding soil or cultivation medium of the crops with an effective amount of an optionally diluted formulation containing flubendiamide as an active ingredient and an effective amount of an optionally diluted formulation containing tolfenpyrad as an active ingredient, the two formulations being used separately at a given interval.

6. A method for controlling agricultural and horticultural insect pests, comprising mixing an effective amount of a formulation containing flubendiamide as an active ingredient and an effective amount of a formulation containing tolfenpyrad as an active ingredient; optionally diluting the mixture; and treating insect pests directly, treating crops potentially infested with the insect pests, or treating surrounding soil or cultivation medium of the crops with the optionally diluted mixture.

## INTERNATIONAL SEARCH REPORT

| | International application No. |
| --- | --- |
| | PCT/JP2012/066473 |

**A. CLASSIFICATION OF SUBJECT MATTER**
*A01N41/10*(2006.01)i, *A01M1/20*(2006.01)i, *A01N43/56*(2006.01)i, *A01P7/04*(2006.01)i

According to International Patent Classification (IPC) or to both national classification and IPC

**B. FIELDS SEARCHED**

Minimum documentation searched (classification system followed by classification symbols)
A01N41/10, A01M1/20, A01N43/56, A01P7/04

Documentation searched other than minimum documentation to the extent that such documents are included in the fields searched

Jitsuyo Shinan Koho          1922–1996    Jitsuyo Shinan Toroku Koho    1996–2012
Kokai Jitsuyo Shinan Koho    1971–2012    Toroku Jitsuyo Shinan Koho    1994–2012

Electronic data base consulted during the international search (name of data base and, where practicable, search terms used)
CAplus(STN), REGISTRY(STN), JSTPlus(JDreamII)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2003-12415 A  (Nihon Nohyaku Co., Ltd.),<br>15 January 2003 (15.01.2003),<br>abstract; tables 1 to 4, 6, 7; page 16, left column<br>& US 2004/0077500 A1     & EP 1380209 A1<br>& WO 2002/087334 A1 | 1-6 |
| Y | JP 2006-131516 A  (Nihon Nohyaku Co., Ltd.),<br>25 May 2006 (25.05.2006),<br>claims; tables 1 to 7<br>(Family: none) | 1-6 |
| P,X | CN 102302009 A  (JIANGSU ROTAM CHEMISTRY CO., LTD.),<br>04 January 2012 (04.01.2012),<br>entire text<br>(Family: none) | 1-6 |

☐ Further documents are listed in the continuation of Box C.      ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 10 August, 2012 (10.08.12) | 21 August, 2012 (21.08.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001131141 A
- WO 2002087334 A
- WO 2004034786 A
- WO 2005004603 A
- WO 2005004604 A
- JP 3081266 A
- JP 2006131516 A
- EP 0374753 A
- WO 9307278 A
- WO 9534656 A
- EP 0427529 A
- EP 451878 A
- WO 03052073 A
- EP 0392225 A
- WO 03000906 A
- WO 9533818 A
- EP 0353191 A

**Non-patent literature cited in the description**

- The Pesticide Manual. British Crop Production Council
- *Proc. Natl. Acad. Sci. USA,* 1990, vol. 87, 7175-7179
- *Weed Science,* 2005, vol. 53, 728-746
- **GURA T.** Repairing the Genome's Spelling Mistakes. *Science,* 1999, vol. 285, 316-318